# EUROPÄISCHE PATENTSCHRIFT

(11) **EP 1 761 834 B1**
(45) Veröffentlichungstag und Bekanntmachung des Hinweises auf die Patenterteilung: **20.10.2010**
(21) Anmeldenummer: 05750100.9
(22) Anmeldetag: 07.06.2005
(51) Int. Cl.: G06F 1/00, G06K 13/08, G06K 7/08, G06K 7/00, G07F 7/08, G07F 19/00, G06K 13/067

(54) **LESEVORRICHTUNG FÜR KARTENFÖRMIGE DATENTRÄGER UND BETRIEBSVERFAHREN HIERFÜR**
READ DEVICE FOR CARD-TYPE DATA CARRIERS AND OPERATING METHOD THEREFOR
DISPOSITIF DE LECTURE POUR SUPPORTS DE DONNEES EN FORME DE CARTES ET PROCEDE DE FONCTIONNEMENT ASSOCIE

(30) Priorität: 29.06.2004 AT 20041108
(43) Veröffentlichungstag der Anmeldung: 14.03.2007
(73) Patentinhaber: KEBA AG, 4041 Linz (AT)
(72) Erfinder: PICHLER, Erich, A 4040 Linz (AT); LEHNER, Christian, A-4490 St. Florian (AT); SCHEIRINGER, Walter, A 4910 Ried im Innkreis (AT); SCHACHERL, Ernst, A 4040 Linz (AT)
(74) Vertreter: Burger, Hannes
(86) Internationale Anmeldenummer: PCT/AT2005/000199
(87) Internationale Veröffentlichungsnummer: WO 2006/000002

(56) Entgegenhaltungen:
- EP-A- 1 530 150
- DE-U1- 29 604 598
- US-B1- 6 460 771
- US-B2- 6 588 659
- WINCOR NIXDORF: "Highlights Newsletter" WINCOR VISION, [Online] Nr. 3/2003, 31. Oktober 2003 (2003-10-31), Seiten 1-24, XP002346367 Brüttisellen (CH) Gefunden im Internet: URL:http://www.wincor-nixdorf.com/internet /ch/WincorVisionArchiv/WincorVision0303PDF ,templateId=blob.jsp,property=Data.pdf> [gefunden am 2005-09-23]

## Beschreibung

Die Erfindung betrifft ein Verfahren zur automatisierten Erkennung von betrügerischen Manipulationen an einer Lesevorrichtung für kartenförmige Datenträger, eine Lesevorrichtung für kartenförmige Datenträger und einen Selbstbedienungsautomaten mit einer Lesevorrichtung für kartenförmige Datenträger, wie dies in den Ansprüchen 1, 13 und 15 beschrieben ist.

Kartenförmige Datenträger in Form von Wert- bzw. Berechtigungskarten zur Inanspruchnahme von Dienstleistungen oder zur Durchführung von Bezahlungs- bzw. Geldabhebevorgängen haben weitere Verbreitung gefunden. In Verbindung mit einem persönlichen Geheimcode (PIN) zur Autorisierung eines Geldungsvorganges oder eines Überweisungsvorganges an einem Selbstbedienungsautomaten stellt die Kombination eines kartenförmigen Datenträgers in Verbindung mit einem Geheimcode an sich eine gegen missbräuchliche Verwendung relativ sichere Methode dar, solange sichergestellt ist, dass nur eine autorisierte Person bzw. der rechtmäßige Besitzer im Besitz des kartenförmigen Datenträgers und zusätzlich in Kenntnis des PIN-Codes verbleibt. Missbräuchliche Verwendungen des kartenförmigen Berechtigungsmittels sind dann zu befürchten, wenn eine unautorisierte Person mit kriminellen Absichten in den Besitz des kartenförmigen Datenträgers, z.B. in Form einer Magnet- bzw. Chipkarte, gelangt und zusätzlich Kenntnis vom geheim zu haltenden PIN-Code erlangt. Sofern ein potentieller Betrüger nur die Karte selbst in seinen Besitz bringt oder dieser nur den PIN-Code, z.B. durch Ausspähen oder sonstige kriminelle Erhebungen in Erfahrung bringt, ist ein Missbrauch nicht möglich.

Vor allem unbeaufsichtigt betriebene Selbstbedienungsautomaten, an denen Geld- oder Kreditkarten zusammen mit einem PIN-Code für die Ausgabe von Bargeld oder für Bezahlvorgänge zum Einsatz kommen, sind mittlerweile weit verbreitet. Diese Automaten sind immer wieder Angriffspunkt für betrügerische Handlungen, bei welchen sich Personen unberechtigt sowohl einer Geldkarte bemächtigen, als auch den zugehörigen PIN-Code in Erfahrung bringen. Sobald diese Personen im Besitz der Karte und des zugehörigen Codes sind, werden üblicherweise innerhalb kürzester Zeit zu Lasten des eigentlichen Eigentümers und Betrugsopfers größere Summen behoben oder Zahlungen getätigt, noch bevor dieser eine Sperre der Karte veranlassen kann bzw. eine derartige Sperre wirksam wird. Hinzu kommt, dass dem rechtmäßigen Kartenbesitzer oftmals gar nicht bewusst ist, dass er Opfer eines trickreichen Betrugsfalles geworden ist.

Ein bei bisherigen Betrugsfällen mehrfach angewandte Manipulation des Kartenlesers eines Automaten sieht vor, dass die Karte zwar vollständig in den Leser eingeführt wird und von diesem auch erfolgreich gelesen werden kann, jedoch nicht mehr automatisch ausgegeben werden kann. Dies erfolgt beispielsweise mittels in betrügerischer Absicht angebrachten Klappen bzw. sonstigen Vorbauten vor dem eigentlichen Ein- und Ausgabeschlitz des Kartenlesers. Die Karte verbleibt sodann also im Automaten, welcher in der Folge gegebenenfalls eine Störung signalisiert. Verlässt der Kunde bzw. rechtmäßige Kartenbesitzer sodann den Automaten, um beispielsweise den vermeintlichen technischen Störfall zu melden, nähert sich der Betrüger und kann aufgrund der Kenntnis der eigentlichen Ursache des Kartenrückhalts bzw. Kartenstaus die Karte rasch aus dem Automaten entfernen. Zum raschen Entfernen einer im Kartenleser verbliebenen Karte kann dabei im Zuge der vorangegangen Manipulation am Kartenschlitz oft auch ein weitgehend unauffälliges, dünnes Band in Form einer Schlaufe angebracht worden sein, mit dem die Karte manuell aus dem Kartenleser herausgezogen werden kann. In einem anderen Betrugsfall wird der ausschließlich einen einziehenden bzw. unidirektionalen Kartentransport erlaubende Vorbau vom Kartenschlitz der Lesevorrichtung wieder abgenommen bzw. wird dieser illegale Anbau am Kartenleser deaktiviert, sodass der Betrüger umgehend in den Besitz der entsprechenden Geld- bzw. Wertkarte gelangt.

Da der Störfall von der Steuerung des Automaten bzw. Lesers erst bei der abschließenden Kartenrückgabe erkennbar ist, wird die vom Kunden beabsichtige Transaktion völlig ungestört durchgeführt und gibt dieser daher auch seinen PIN-Code zur Autorisierung ein. Diese Eingabe wird von einem Betrüger, z.B. mittels einer am Automaten oder in der Nähe des Automaten angebrachten Minikamera oder mittels sonstigen bekannten Tricks beobachtet bzw. ausgeforscht, wodurch der Kriminelle in den Besitz von Karte und Code gelangt.

In der den nächstliegenden Stand der Technik darstellenden WO 01/84486 A1 bzw. US 6,588,659 B2 ist ein Kartenleser zur Unterbindung bzw. Erschwerung von Betrugsfällen angegeben. Dieses Kartenlesemodul ist derart ausgebildet, dass bei Feststellung einer nicht transportierbaren Karte diese mittels einem Rückhaltemechanismus innerhalb des Kartenlesers eingeschlossen bzw. einbehalten wird. Der entsprechende Rückhaltemechanismus kann dabei durch einen breitensensitiven Schalter und eine diesem zugeordnete, steuerbare Sperrvorrichtung gebildet sein. Der breitensensitive Schalter ist dabei im Einzugs- bzw. Anfangsabschnitt des Kartenlesers angeordnet. Für den Fall, dass dieser Rückhaltemechanismus eine zugeführte Karte nicht einbehalten kann, kann vom Kartenleser ein im Einzugsbereich bzw. Einführschlitz angeordneter Magnetkopf aktiviert werden, um die auf dem Magnetstreifen der Karte gespeicherten Daten zu löschen. Durch die mechanisch wirkende, elektronisch aktivierbare Sperrvorrichtung im Kartenleser kann ein nachträgliches Entfernen einer in betrügerischer Absicht gezielt blockierten Karte durch einen Kriminellen verhindert werden. Diese mechanische Sperrvorrichtung bzw. Rückhaltevorrichtung für das Kartenlesemodul erfordert zusätzliche mechanische Komponenten, verursacht erhöhten Aufwand, erhöhte Kosten und damit einhergehend auch ein gewisses Maß an zusätzlichen Ausfallsrisiken.

Die US 6,460,771 B1 offenbart einen Kartenleser, der die Karte gleichmäßig bewegt, wenn sie sich vollständig im Leser befindet, so dass sie dort normal gelesen werden kann. Während des Einführens und bei der Kartenrückgabe wird die Karte jedoch ruckartig befördert, so dass ein eventuell am Einführschlitz angebrachter zweiter Lesekopf die Daten auf dem Magnetstreifen nicht ausspähen kann.

Der vorliegenden Erfindung liegt die Aufgabe zugrunde, mit einfachen und kostengünstigen Maßnahmen einen Manipulationsversuch an einer Lesevorrichtung für kartenförmige Datenträger zu erkennen und betrügerische Absichten möglichst zu vereiteln.

Diese Aufgabe der gegenständlichen Erfindung wird durch die Merkmale gemäß Anspruch 1 gelöst. Von besonderem Vorteil ist dabei, dass ein in Betrugsabsicht manipulierter Kartenleser bzw. Selbstbedienungsautomat automatisiert erkennt, ob innerhalb der Einzugsstrecke bzw. innerhalb des Rückgabewegs unübliche Blockaden bzw. Sperren hinsichtlich eines ordnungsgemäßen Rücktransportes des kartenförmigen Datenträgers vorliegen, die im Regelfall auf eine Betrugsabsicht bzw. in den seltensten Fällen auf einen Defekt der Lesevorrichtung oder auf eine unbrauchbare bzw. beschädigte Karte hinweisen. Von besonderem Vorteil ist beim erfindungsgemäßen Verfahren, dass ohne bzw. ohne wesentliche mechanische Änderungen oder Zusatzkomponenten der Lesevorrichtung zuverlässig verhindert wird, dass ein Betrüger bei Manipulationen an der Lesevorrichtung an die Karte und an den entsprechenden Code gelangt. Jedenfalls wird durch das erfindungsgemäße Vorgehen verhindert, dass der Benutzer bzw. Bediener des Automaten bzw. der Kartenlesevorrichtung beim Vorliegen einer gewissen Wahrscheinlichkeit eines Manipulationsfalles seinen Geheimcode preisgibt, da er nicht zum Eintippen des Codes veranlasst ist bzw. dazu nicht aufgefordert wird. Im schlechtesten Fall kann der Betrüger somit nur die Karte in Empfang nehmen, sofern ein Einbehalten der Karte im Kartenleser nicht vorgesehen bzw. aufgrund arglistiger Manipulation gar nicht möglich ist. Ein Ausspionieren des Codes ist jedoch nicht möglich und dieser bleibt somit geheim. Neben dem Vorteil, dass kaum Zusatzkomponenten notwendig sind bzw. überhaupt kein mechanischer Aufwand erforderlich ist, nachdem das entsprechende Verfahren softwaremäßig bzw. ablaufgesteuert durch die Lesevorrichtung bzw. einen Selbstbedienungsautomaten ausgeführt bzw. umgesetzt werden kann, ist von besonderem Nutzen, dass auch bestehende, am Markt verfügbare bzw. im Einsatz befindliche Lesevorrichtungen relativ einfach nachgerüstet bzw. adaptiert werden können. Es können also auch derzeit weit verbreitete, motorbetriebene Kartenleser zumeist ohne Änderungen an der Mechanik bzw. der Elektronik durch relativ einfache, softwaretechnische Maßnahmen in der beschriebenen Art und Weise betrieben werden, sodass die Betrugssicherheit von bereits bestehenden Automatensystemen relativ kostengünstig verbessert werden kann. Andererseits kann durch das beschriebene Verfahren die mechanische Ausgestaltung von neu aufzubauenden Kartenlesern teilweise einfacher gestaltet und damit kostengünstiger gehalten werden, obwohl damit erhöhte Betrugssicherheit erreicht wird. Von besonderem Vorteil ist dabei, dass vor der Einleitung einer Transaktion überprüft wird, ob der kartenförmige Datenträger wieder an jene Person retourniert werden kann, die ihn zugeführt hat.

Vorteilhaft sind auch die Maßnahmen nach Anspruch 2 und/oder 3, da dadurch automatisiert festgestellt wird, ob der Datenträger bis zur jeweiligen Testpositionen eingezogen werden kann, sodass eventuell angebrachte Klemm- bzw. Rückhaltevorrichtungen, wie z.B. in krimineller Absicht im Kartenschlitz eingelegte Rückzugsschlaufen, detektiert werden können.

Beim Verfahren gemäß Anspruch 4 ist vorteilhaft, dass der kartenförmige Datenträger bzw. dessen Transportstrecke sowohl hinsichtlich der Einziehbarkeit in die Lesevorrichtung als auch hinsichtlich der Rückgabemöglichkeit des kartenförmigen Datenträgers vorsorglich auf Unstimmigkeiten überprüft wird und beim Detektieren eines Einzugs- oder Ausschubproblems die üblicherweise stattfindende, plangemäße Verarbeitung des Datenträgers abgebrochen wird, indem eine Codeeingabe jedenfalls nicht mehr durchgeführt wird. Ein Delinquent kann somit - wenn überhaupt - lediglich in den Besitz des kartenförmigen Datenträgers kommen.

Bei den Vorkehrungen nach Anspruch 5 ist von Vorteil, dass eine fälschliche Entnahme des Datenträgers durch den rechtmäßigen Besitzer bzw. Bediener infolge des automatisierten Ausschubs des Datenträgers vermieden werden kann. Zudem entstehen durch einen derartigen Prüfablauf kaum zeitliche Verzögerungen und ist der Benutzungskomfort für den Kunden nicht beeinträchtigt, da die Prüfroutine vollautomatisch abläuft.

Von Vorteil sind auch die Maßnahmen nach Anspruch 6, da dadurch sichergestellt wird, dass ein in Manipulationsabsicht vor der Öffnung des Kartenlesers angebrachter Aufsatz erkannt wird bzw. nicht zum Ziel führt. Falls nämlich dieser Aufsatz tiefer bzw. dicker ist, als jene Länge des Kartenabschnittes, die ab dem automatischen Erkennen bzw. Einziehen einer eingeschobenen Karte noch aus dem eigentlichen Kartenleserschlitz ragt, so kann die Karte vom Besitzer gar nicht weit genug eingeführt werden, um sie vom motorisierten Kartenleser automatisiert zu erfassen bzw. einzuziehen. Ist dieser in Manipulationsabsicht angebrachte Aufsatz schmal genug, ragt die Karte bei Einnahme dieser zweiten Testposition etwas weiter aus dem Kartenschlitz heraus, als es zum Zeitpunkt der automatisierten Erfassung bzw. des automatisierten Einziehens der Fall war. Ein Aufsatz bzw. Vorbauteil mit einer Blockiervorrichtung, mit der ein automatischer Karteneinzug also noch funktionieren würde, der aber ein nachfolgendes Ausschieben bis in die zweite Testposition verhindern würde, wird somit ebenso erkannt. Die vom Bediener beabsichtigte Transaktion wird somit nicht stattfinden bzw. wird die PIN-Eingabe erst gar nicht aufgerufen, da die automatisierte Zurückgabe des Datenträgers offensichtlich scheitern wird und dies einen Abbruch verursacht bzw. als Störfall oder kritischer Fehler erkannt wird.

Die vorteilhaften Maßnahmen gemäß Anspruch 7 schließen zusätzlich aus, dass ein Betrüger aufgrund einer manipulierten Lesevorrichtung an den kartenförmigen Datenträger gelangt.

Durch die Maßnahmen gemäß Anspruch 8 ist sichergestellt, dass auch dann, wenn ein Betrüger in den Besitz des Datenträgers gelangt, dieser nicht mehr verwendbar ist.

Bei den weiterführenden Maßnahmen gemäß Anspruch 9 ist von Vorteil, dass die Sperre des den Störfall verursachenden Datenträgers unmittelbar und automatisiert erfolgt, sodass kaum Zeit für eine kriminelle Verwendung des kartenförmigen Datenträgers verbleibt.

Die Maßnahme nach Anspruch 10 kann in einfacher Art und Weise verhindern, dass weitere kartenförmige Datenträger zugeführt werden, welche unter Umständen nicht mehr einbehalten werden können.

Durch die Weiterbildung gemäß Anspruch 11 kann das Entstehen eines finanziellen Schadens verhindert werden bzw. können Verhaltensfehler, wie z.B. ein Verlassen des Kartenleders bzw. des Selbstbedienungsautomaten, vermieden werden.

Durch die Maßnahmen gemäß Anspruch 12 kann in einfacher Art und Weise ermittelt werden, ob hinsichtlich des Kartentransportes etwaige Ungereimtheiten auftreten bzw. ob ein ordnungsgemäßer Kartentransport ausführbar ist.

Eine eigenständige Lösung der Aufgabe der Erfindung ist durch eine Lesevorrichtung gemäß Anspruch 13 gegeben. Vorteilhaft ist bei einer derartigen Lesevorrichtung, dass diese ohne aufwendige Zusatzkomponenten verhindert, dass unbefugte Dritte mit betrügerischen Absichten den PIN-Code und den zugehörigen, datenförmigen Datenträger erlangen können. Insbesondere kann dadurch automatisiert überprüft werden, ob der Transportweg, insbesondere der Rücktransportweg für den Datenträger frei bzw. verfügbar ist, oder ob etwaige Manipulationen bzw. Störungen vorliegen.

Von Vorteil ist bei der Ausgestaltung gemäß Anspruch 14, dass bestehende Lesevorrichtungen problemlos und kostengünstig nachgerüstet werden können bzw. bereits in Einsatz befindliche Lesevorrichtungen in einfacher Art und Weise entsprechend adaptiert werden können.

Die Aufgabe der Erfindung wird aber auch durch einen Selbstbedienungsautomaten gemäß den in Anspruch 15 angegebenen Merkmalen gelöst. Vorteilhaft ist dabei, dass ein derartiger Selbstbedienungsautomat, z.B. in Form eines Geldausgabeautomaten, relativ kostengünstig aufgebaut bzw. umgerüstet werden kann und hinsichtlich betrügerischer Manipulationen betreffend die Kartenhandhabung erhöhte Sicherheit bietet.

Die Erfindung wird im Nachfolgenden anhand der in den Zeichnungen dargestellten Ausführungsbeispiele näher beschrieben.

Es zeigen:
- Fig. 1: eine mögliche Ausführungsform eines Selbstbedienungsautomaten mit einer Lesevorrichtung zur Aufnahme von kartenförmigen Datenträgern in auszugs- weiser, schematischer Darstellung;
- Fig. 2: eine beispielhafte Lesevorrichtung zur Aufnahme eines kartenförmigen Datenträ- gers in stark vereinfachter, schematischer Darstellung;
- Fig. 3: die Lesevorrichtung gemäß Fig. 2 mit einem vollständig eingezogenen, karten- förmigen Datenträger;
- Fig. 4: die Lesevorrichtung gemäß Fig. 3 mit dem zumindest teilweise wieder ausge- gebenen, kartenförmigen Datenträger;
- Fig. 5: die Lesevorrichtung nach Fig. 4 bei neuerlich eingezogener und in Verarbeitungs- bzw. Leseposition befindlicher Stellung des Datenträgers.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

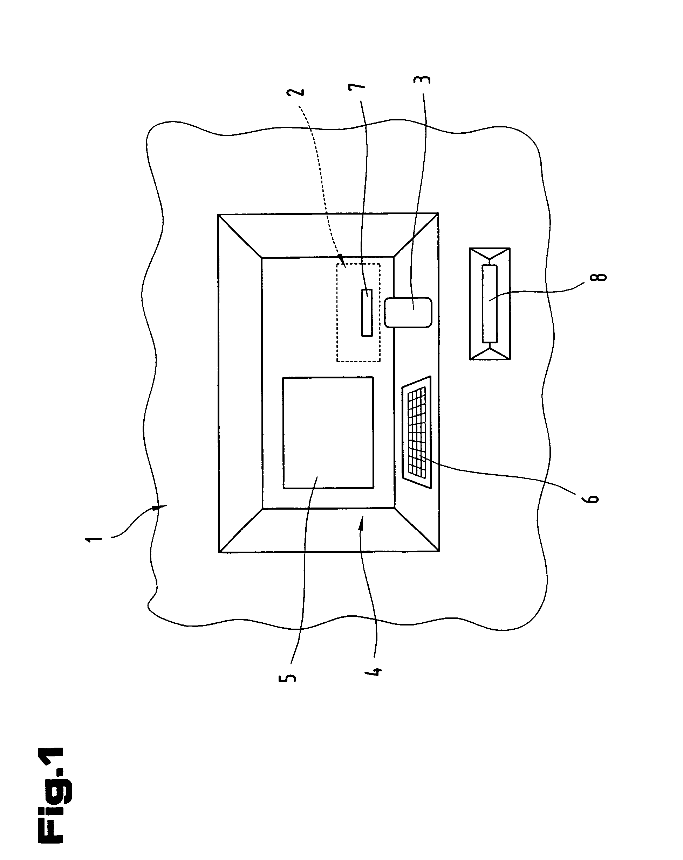

In Fig. 1 ist ein Abschnitt eines beispielhaften Selbstbedienungsautomaten 1 veranschaulicht. Dieser Selbstbedienungsautomat 1 ist üblicherweise durch einen Geldausgabeautomaten gebildet, kann jedoch auch durch einen sonstigen Automaten zur Inanspruchnahme von Leistungen bzw. Waren gebildet sein. Eine Autorisierung an diesem üblicherweise unbeaufsichtigt bzw. lediglich mit Kameraüberwachung betriebenen Selbstbedienungsautomaten 1 erfolgt mittels einer Lesevorrichtung 2 für kartenförmige Datenträger 3 in Verbindung mit einem persönlichen Geheimcode bzw. PIN (personal identification number), der nur dem berechtigten Inhaber des kartenförmigen Datenträgers 3 bekannt sein soll. Durch Verwendung des entsprechenden Datenträgers 3 in Kombination mit dem dazugehörigen Geheimcode ist eine Inanspruchnahme der jeweiligen Leistung, insbesondere eine Bargeldbehebung am Selbstbedienungsautomaten 1 möglich. Hierzu wird, wie an sich bekannt, der Datenträger 3, welcher beispielsweise in Form einer Magnet- und/oder Chipkarte mit standardisiertem Format vorliegt, der Lesevorrichtung 2 zugeführt. Mittels einer Bedienerschnittstelle 4 am Selbstbedienungsautomaten 1 kann sodann die entsprechende Interaktion zwischen dem Automaten und dem jeweiligen Bediener stattfinden. Die Bedienerschnittstelle 4 umfasst einen Bildschirm 5 zur Benutzerführung, vorzugsweise einen sogenannten Touch-Screen, als auch eine Tastatur 6 zur Menüführung, zur Eingabe von Befehlen bzw. zur Eingabe des Gemeincodes.

Die Lesevorrichtung 2 ist derart ausgebildet, dass bei Zuführung eines geeigneten, kartenförmigen Datenträgers 3 dieser automatisiert in die Lesevorrichtung 2 eingezogen, verarbeitet, insbesondere gelesen und nach erfolgter Autorisierung bzw. Transaktion dem Bediener des Selbstbedienungsautomaten 1 wieder retourniert wird, indem der Datenträger 3 über einen Ein- und Ausgabeschlitz 7 der Lesevorrichtung 2 wieder ausgegeben wird. Für den Fall, dass der Selbstbedienungsautomat 1 als Einzahlungs- und/oder Auszahlungsautomat ausgeführt ist, umfasst er weiters eine Ein- und/oder Ausgabeöffnung 8 zur Zufuhr bzw. Entnahme von Belegen bzw. von Bargeld.

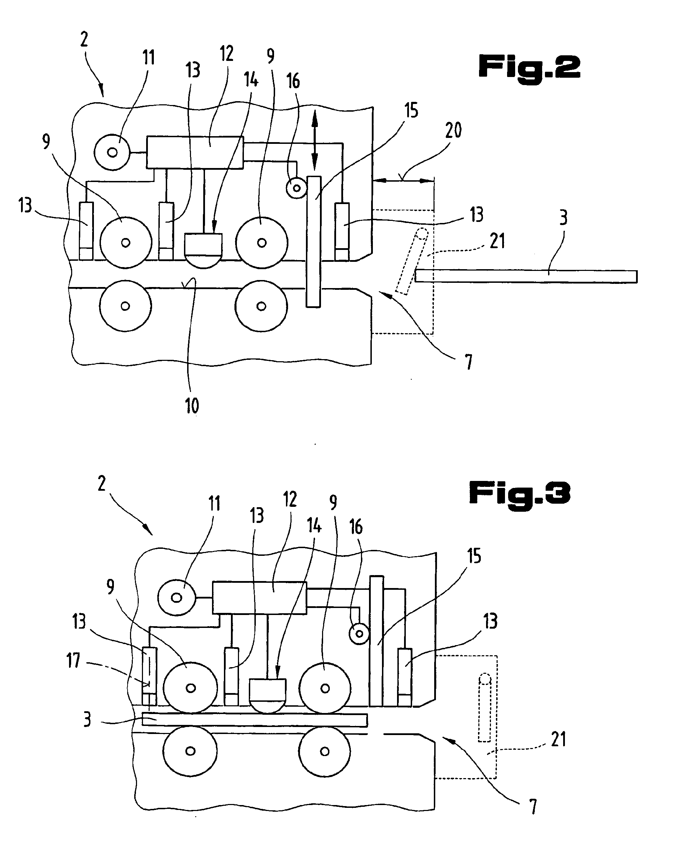

In den Fig. 2 bis 5 ist eine mögliche Ausführungsform einer beispielhaften, stark vereinfachten Lesevorrichtung 2 veranschaulicht, mit welcher das erfindungsgemäße Verfahren zur automatisierten Erkennung von betrügerischen Manipulationen ausführbar ist.

Die Lesevorrichtung 2 umfasst dabei zum automatisierten Transport eines zugeführten, kartenförmigen Datenträgers 3 innerhalb der Lesevorrichtung 2 zumindest eine Transportrolle 9. Vorzugsweise ist zumindest ein Transportrollenpaar ausgeführt bzw. sind einzelnen Transport- bzw. Antriebsrollen freilaufende Gegendruckrollen zugeordnet, um eine zuverlässige Relativverstellung eines zu verarbeitenden Datenträgers 3 zu erzielen. Die Transportrollen 9 der motorisch betriebenen Transportvorrichtung sind entlang einer Führungsbahn 10, welche durch Führungsleisten oder durch sonstige Führungsflächen gebildet sein kann, angeordnet. Die zumindest eine Transportrolle 9 der Lesevorrichtung 2 ist mit einem Antriebsmotor 11 bewegungsgekoppelt, der ausgehend von einer elektronischen Steuervorrichtung 12 in Drehbewegung versetzbar ist. Der Antriebsmotor 11 ist dabei bevorzugt in seiner Drehrichtung umkehrbar, sodass ein automatisierter Einzug und eine automatisierte Ausgabe eines kartenförmigen Informations- bzw. Datenträgers 3 ermöglicht ist.

Die Steuervorrichtung 12 ist weiters mit zumindest einem Geber bzw. Sensor 13 verbunden, über den bzw. über welche die Position bzw. das Vorliegen eines kartenförmigen Datenträgers 3 an bestimmten Positionen innerhalb des Transportweges bzw. der Führungsbahn 10 erfasst werden kann. Die üblicherweise entlang der Führungsbahn 10 angeordneten Sensoren 13 sind bevorzugt durch optoelektronische Sensoren, insbesondere durch Lichtschrankenanordnungen gebildet, mit welchen das Eintreten einer Kante des kartenförmigen Datenträgers 3 detektierbar ist bzw. mit welchen eine Oberfläche eines kartenförmigen Datenträgers 3 automatisiert erkennbar ist. Die Sensoren 13 dienen also vorwiegend dazu, die Relativposition eines eingezogenen Datenträgers 3 innerhalb der Lesevorrichtung 2 zu ermitteln bzw. die plangemäße Kartenposition in Verbindung mit den jeweiligen Steuerbefehlen der Steuervorrichtung 12 zu verifizieren bzw. abzustimmen.

Zum Lesen und/oder Schreiben von Daten in Bezug auf einen zugeführten Datenträger 3 umfasst die Lesevorrichtung 2 zumindest einen Schreib- und/oder Lesekopf 14. Dieser Schreib-und/oder Lesekopf 14 kann durch einen Magnetkopf zur Bearbeitung des Magnetstreifens einer Magnetkarte bzw. durch eine Kontaktanordnung zur elektrischen Kontaktierung der Kontaktflächen des elektronischen Chip einer Chipkarte gebildet sein. Üblicherweise ist ein Schreib- und/oder Lesekopf 14 für den Magnetstreifen und ein Schreib- und/oder Lesekopf 14 zur Kontaktierung der Kontaktflächen eines am Datenträger 3 integrierten Chip vorgesehen. Die Schreib- und/oder Leseköpfe 14 sind ebenso mit der Steuervorrichtung 12 der Lesevorrichtung 2 bzw. mit der Steuerung des Selbstbedienungsautomaten 1 leitungsverbunden. Ebenso kann die Steuervorrichtung 12 der Lesevorrichtung 2 mit einer Steuerung des Automaten gekoppelt sein.

Gegebenenfalls umfasst die Lesevorrichtung 2 auch einen sogenannten Shutter bzw. eine automatisiert aktivier- und deaktivierbare Verschlussvorrichtung 15 für den Ein- und Ausgabeschlitz 7 der Lesevorrichtung 2. Diese Verschlussvorrichtung 15 ist, wie an sich bekannt, durch einen Riegel bzw. eine verstellbar gelagerte Blende gebildet, welche in Abhängigkeit von Steuerbefehlen der Steuervorrichtung 12 aktivier- bzw. deaktivierbar ist. Hierzu umfasst die Verschlussvorrichtung 15 eine Antriebsvorrichtung 16, beispielsweise einen Elektromotor oder einen Linearmotor bzw. einen Zugankermagneten, welcher mit der Steuervorrichtung 12 leitungsverbunden ist. Die Steuervorrichtung 12 kann dabei zentral oder dezentral ausgeführt sein, insbesondere der Lesevorrichtung 2 und/oder dem Selbstbedienungsautomaten 1 zugeordnet sein.

Im nachfolgenden wird das erfindungsgemäße Verfahren bzw. die vorteilhafte Betriebsweise der Lesevorrichtung 2 erläutert, um damit in betrügerischer Absicht vorgenommene Manipulationen an der Lesevorrichtung 2 zu erkennen und einen beabsichtigten Missbrauch zu verhindern bzw. zu erschweren. Die vorhergehend beschriebene Ausführung der Lesevorrichtung 2 ist dabei als beispielhaft zu betrachten und kann die Lesevorrichtung 2 technisch komplexer bzw. einfacher oder auch baulich anders ausgerührt sein.

Führt ein Besitzer eines kartenförmigen Datenträgers 3 mit entsprechenden Abmessungen einen solchen Datenträger 3 dem Ein- und Ausgabeschlitz 7 der Lesevorrichtung 2 zu, kann zunächst mittels einem Sensor 13 bzw. einem sonstigen Detektor überprüft werden, ob der Datenträger 3 gewissen Grundanforderungen entspricht. Insbesondere kann mittels einem Detektor oder dem Sensor 13 ermittelt werden, ob ein Magnetstreifen vorliegt bzw. ob der Datenträger 3 in der ordnungsgemäßen Lage bzw. Ausrichtung zugeführt wird. Bei positiv abgeschlossener, optionaler Vorüberprüfung wird die optional ausgebildete Verschlussvorrichtung 15 deaktiviert, indem ein Riegel bzw. eine Blende automatisch in die deaktive Stellung überführt wird, sodass der Ein- und Ausgabeschlitz 7 für das weitere Einschieben des Datenträgers 3 frei bzw. zugänglich wird.

Jedenfalls wird ein zugeführter, kartenförmiger Datenträger 3 ab dem Erreichen einer vorbestimmten Einstecktiefe von der Transportvorrichtung, insbesondere von zumindest einer Transportrolle 9 erfasst und motorisiert in die Lesevorrichtung 2 eingezogen. Bevorzugt wird der Datenträger 3 vollständig in die Lesevorrichtung 2 eingezogen, d.h. der Datenträger 3 verschwindet zur Gänze im Ein- und Ausgabeschlitz 7, wie dies in Fig. 3 beispielhaft gezeigt ist. Insbesondere wird der kartenförmige Datenträger 3 bis zu einer ersten Testposition 17 eingezogen, an welcher der Datenträger 3 vollständig in der Lesevorrichtung 2 verschwindet. Diese erste Testposition 17 kann dabei durch eine Schreib- bzw. Leseposition für den Datenträger 3 definiert sein oder aber durch eine Position vor oder nach jener Stelle, an welcher der kartenförmige Datenträger 3, insbesondere dessen kontaktbehafteter Chip auslesbar bzw. beschreibbar ist, festgelegt sein.

Vorzugsweise wird das Erreichen der ersten Testposition 17 automatisiert überprüft. Hierzu ist zumindest ein Sensor 13 vorgesehen, der auf das Eintreffen einer Kartenkante bzw. Kartenoberfläche mit einem entsprechenden Sensorsignal reagiert und welches somit von der Steuervorrichtung 12 entsprechend verarbeitbar ist. Eine derartige Überprüfung des Erreichens der ersten Testposition 17 kann jedoch auch erübrigt werden. Insbesondere kann die Transportvorrichtung bzw. die jeweilige Transportrolle 9 derart lang aktiviert sein, dass der Datenträger 3 gesichert eingezogen ist und im Normalfall an der definierten Testposition 17 innerhalb der Lesevorrichtung 2 vorliegt. Die Testposition 17 ist derart definiert, dass die in Einzugsrichtung hintere Kante des Datenträgers 3 zumindest bündig mit einer Frontplatte bzw. Frontseite der Lesevorrichtung 2 abschließt.

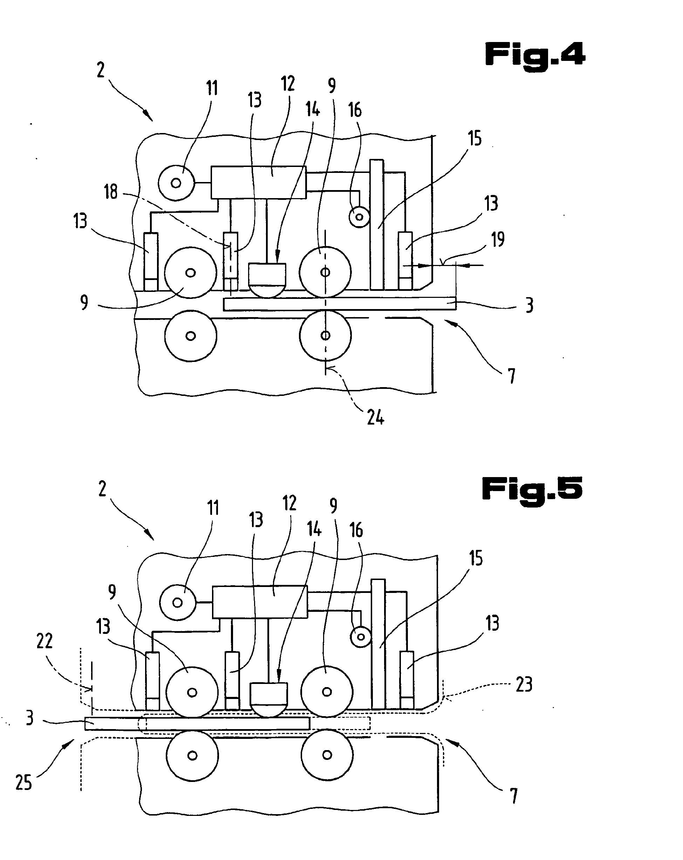

Nach dem motorisierten Einziehen des Datenträgers 3 wird dieser wieder motorisiert aus dem Ein- und Ausgabeschlitz 7 ausgeschoben. Dieser Ausschub bzw. dieser Rücktransport des Datenträgers 3 kann unmittelbar oder nach einem kurzen Stillstand des Datenträgers 3 ausgeführt werden. Jedenfalls erfolgt nach dem erstmaligen Einziehen des Datenträgers 3 bis zur ersten Testposition 17 noch keine Bearbeitung des Datenträgers 3, insbesondere auch keine Eingabe des Geheimcodes, sondern wird der Datenträger 3 zunächst wieder ausgeschoben. Das Ausschieben bzw. motorisierte Ausfahren des kartenförmigen Datenträgers 3 erfolgt dabei bis zu einer zweiten Testposition 18, wie dies in Fig. 4 beispielhaft veranschaulicht wurde. In dieser zweiten Testposition ragt ein auf die Zuführrichtung bezogener, hinterer Abschnitt bzw. eine hintere Kante des kartenförmigen Datenträgers 3 aus der Lesevorrichtung 2 bzw. aus dem Ein- und Ausgabeschlitz 7 heraus, sofern die Lesevorrichtung 2 nicht mit einer Klappenanordnung bzw. einer sonstigen Rückgabesperre betrügerisch manipuliert wurde.

Ein Überstand 19 des kartenförmigen Datenträgers 3 bei Einnahme der zweiten Testposition 18 beträgt mehr als 5 mm, bevorzugt 10 mm bis 25 mm. Der Überstand 19 des kartenförmigen Datenträgers 3 bei Einnahme der zweiten Testposition 18 entspricht zumindest in etwa einer Tiefe 20 einer in betrügerischer Absicht unter Umständen angeordneten, in strichlierten Linien angedeuteten Ausgabesperrvorrichtung 21 für einen kartenförmigen Datenträger 3. Der Überstand 19 des Datenträgers 3 in der Testposition 18 sollte vorzugsweise etwas größer sein als die Dicke bzw. Tiefe 20 einer dem Ein- und Ausgabeschlitz 7 in missbräuchlicher Absicht vorgeordneten Ausgabesperrvorrichtung 21. Die zweite Testposition 18 ist bevorzugt auch derart definiert, dass der Datenträger 3 derart weit aus der Lesevorrichtung 2 ragt, wie dies zum sicheren Ergreifen des Datenträgers 3 für dessen spätere Rückgabe erforderlich ist.

Bevorzugt wird automatisiert überprüft, ob die vordefinierte zweite Testposition 18 vom kartenförmigen Datenträger 3 erreichbar ist. Hierzu ist ein Sensor 13 ausgebildet, mit welchem das Vorliegen des kartenförmigen Datenträgers 3 an der Testposition 18 erkennbar bzw. detektierbar und von der Steuervorrichtung 12 auswertbar ist. Anstelle der Ausbildung eines Sensors 13 bzw. eines sonstigen sensorischen Mittels bzw. Erfassungsmittels zur Überprüfung des Erreichens der zweiten Testposition 18 ist es auch möglich, anhand des Verhaltens des Antriebsmotors 11 auf das Erreichen der zweiten Testposition 18 entsprechende Rückschlüsse zu ziehen. Insbesondere dann, wenn ungewöhnlich hohe Antriebskräfte zur Überführung des Datenträgers 3 in die zweite Testposition 18 erforderlich sind, welche sich z.B. durch eine erhöhte Stromaufnahme zeigen, ist davon auszugehen, dass der Datenträger 3 nicht in die zweite Testposition 18 überführt werden konnte. Insbesondere kann die Stromaufnahme des Antriebsmotors 11 während der Ausschiebebewegung für den Datenträger 3 überwacht werden und beim Auftreten einer ungewöhnlich hohen Stromaufnahme bzw. beim Auftreten einer impulsartigen Stromanstieges bereits vor dem plangemäßen Erreichen der zweiten Testposition 18 auf eine Manipulation des Transportweges geschlossen werden.

Unabhängig davon bzw. in Kombination dazu ist es aber auch möglich, durch Anordnung eines Weg- bzw. Impulsgebers, beispielsweise am Antriebsmotor 11 bzw. an sonstigen damit in Bewegungskopplung stehenden Elementen, auf eine ordnungsgemäße Zurücklegung des entsprechenden Transportweges bzw. der vordefinierten Transportstrecke für den Datenträger 3 Rückschlüsse zu ziehen. Dies setzt voraus, dass eine ausreichend hohe Kraftkopplung zwischen der Transportvorrichtung bzw. zwischen den Transportrollen 9 und dem Datenträger 3 vorliegt.

Für den Fall, dass bei der automatisierten Überprüfung des Erreichens der zweiten Testposition 18 festgestellt wird, dass der Datenträger 3 diese zweite Testposition 18 nicht erreicht hat bzw. nicht erreichen kann, ist davon auszugehen, dass eine Manipulation vorliegt. In diesem Fall wird die weitere Verarbeitung bzw. Bearbeitung des Datenträgers 3 abgebrochen. Jedenfalls wird sodann eine Eingabe des Geheimcodes erübrigt und ein Störfall signalisiert. Diese Signalisierung kann durch eine entsprechende Meldung an der Bedienerschnittstelle des Automaten erfolgen. Das Erreichen der zweiten Testposition 18 kann dabei durch direkte sensorische Erfassung oder durch indirekte Erhebungen ermittelt werden, wie dies vorhergehend erläutert wurde.

Ergibt die steuerungstechnische Überprüfung, dass der Datenträger 3 infolge des automatisierten Ausschubs die zweite Testposition 18 ordnungsgemäß erreicht hat, erfolgt ein erneutes motorisches Einziehen des kartenförmigen Datenträgers 3 in die erste Testposition 17 bzw. in eine dritte Testposition 22, wie dies in Fig. 5 mit strichlierten Linien bzw. mit vollen Linien dargestellt wurde. In dieser ersten bzw. dritten Testposition 17; 22 ist eine Verarbeitung, insbesondere ein Lesen des maschinenlesbaren Datenträgers 3 möglich. Vorzugsweise wird das erneute Erreichen der Testposition 17 bzw. der dritten Testposition 22 automatisiert überprüft. Hierzu kann wiederum zumindest einer der Sensoren 13 herangezogen werden und/oder das Transport- bzw. Antriebsverhalten der motorischen Transportvorrichtung überwacht werden.

Wesentlich ist, dass die Eingabe des Geheimcodes bzw. des PIN-Codes nur dann erfolgt, wenn die zweite Testposition 18 erreicht wurde bzw. die Überprüfung des Erreichens der zweiten Testposition 18 positiv abgeschlossen werden konnte. Dadurch ist sichergestellt, dass der Datenträger 3 nach Durchführung der Transaktion bzw. nach Eingabe des Geheimcodes wieder an jenen Bediener, der den Geheimcode eingetippt bzw. eingegeben hat, retourniert werden kann.

Gemäß einer vorteilhaften Ausführung wird erst dann zur Eingabe des Geheimcodes bzw. des PIN aufgefordert, wenn die zweite Überprüfung und gegebenenfalls die erste bzw. dritte Überprüfung für das Erreichen der zweiten Testposition 18 und gegebenenfalls für das Erreichen der ersten bzw. dritten Testposition 17, 22 positiv war. Insbesondere ist es grundsätzlich ausreichend zu überprüfen, ob ein zugeführter Datenträger 3 wieder ausschiebbar ist, d.h. ob dieser die Testposition 18 erreichen kann. Erst wenn diese automatische Überprüfung ergibt, dass der Datenträger 3 wieder an den rechtmäßigen Besitzer bzw. Bediener retourniert werden kann, wird von der Lesevorrichtung 2 bzw. vom Selbstbedienungsautomaten 1 eine Aufforderung zur Eingabe des Geheimcodes ausgegeben. Dadurch wird in einfacher Art und Weise sichergestellt, dass infolge einer betrügerischen Manipulation des Kartenlesers, insbesondere aufgrund einer Anbringung einer Ausgabesperrvorrichtung 21, ein Krimineller an den kartenförmigen Datenträger 3 und an den während einer Transaktion ausspionierten bzw. anderweitig ermittelten Geheimcode gelangen kann. Für den Fall, dass lediglich die zweite Testposition 18 bzw. die Rückgabe- oder Aufnahmeposition des Datenträgers 3 automatisiert überprüft wird, kann festgestellt werden, ob unter Umständen eine Ausgabesperrvorrichtung 21 am Ein- und Ausgabeschlitz 7 angebracht wurde.

Für den Fall, dass das Erreichen der ersten Testposition 17 bzw. der dritten Testposition 22 automatisiert überprüft wird, kann festgestellt werden, ob an der Lesevorrichtung 2, insbesondere in dessen Ein- und Ausgabeschlitz 7, eine in Fig. 5 mit strichlierten Linien schematisch angedeutete Rückzugsschlaufe, insbesondere eine sogenannte "lebanese-loop" angebracht wurde. Wird nämlich diese erste bzw. dritte Testposition 17; 22 nicht erreicht, so kann es sein, dass der Datenträger 3 durch eine derartige Rückzugsschlaufe 23 in krimineller Absicht festgehalten bzw. festgeklemmt wurde bzw. kann auch eine sonstige Störung vorliegen.

Bei Nichtereichen der zweiten Testposition 18 und/oder bei Nichterreichen der ersten bzw. dritten Testposition 17, 22 wird jedenfalls die üblicherweise vorgesehene Transaktion abgebrochen. Insbesondere wird unbedingt vermieden, dass der Bediener den Geheimcode eingibt. Dies wird in einfacher Art und Weise dadurch erzielt, dass der Selbstbedienungsautomat 1 bzw. die Lesevorrichtung 2 den Bediener erst gar nicht zur Eingabe seines Geheimcodes auffordert. Gegebenenfalls kann vom Selbstbedienungsautomaten 1 über den Bildschirm 5 auch ein Hinweis ausgegeben werden, den Geheimcode nicht mehr einzutippen bzw. nicht preiszugeben. Das oben geschilderte Verfahren ist in einfacher Art und Weise mittels softwaretechnischen Ablaufprogrammen umsetzbar und sind keine zusätzlichen bzw. kaum mechanische Komponenten erforderlich, um die betrügerischen Manipulationen, z.B. eine Ausgabesperrvorrichtung 21 bzw. eine Rückzugsschlaufe 23, automatisiert zu detektieren.

Zweckmäßig ist es, wenn ein kartenförmiger Datenträger 3 für die Einnahme der zweiten Testposition 18 vergleichsweise weiter aus der Lesevorrichtung 2 hinausgeschoben wird, als dies beim Erreichen einer automatischen Einzugsposition 24, ab der ein kartenförmiger Datenträger 3 beim erstmaligen bzw. benutzerseitigen Zuführen automatisch erkannt bzw. eingezogen wird, vordefiniert ist. Dadurch wird in einfacher Art und Weise sichergestellt, dass ein manuell zugeführter Datenträger 3, der ab dem Erreichen der Einzugsposition 24 erfasst bzw. automatisch weitertransportiert wird, von der Lesevorrichtung 2 auch derart weit wieder ausgeschoben wird, dass der Datenträger 3 vom rechtmäßigen Besitzer bzw. Bediener wieder entnommen werden und somit in dessen Verwahrung übergeben kann, sofern die Lesevorrichtung 2 nicht manipuliert wurde. Widrigenfalls wird eine Inkorrektheit erkannt und die ansonsten nachfolgende Geheimcodeeingabe erübrigt.

Die Einzugsposition 24 wird beispielsweise durch die Greif- bzw. Wirkposition der auf die Einzugsrichtung bezogenen, ersten Transportrolle 9 definiert bzw. durch Anordnung eines Sensors 13 bestimmt, der ab dem Erreichen dieser Einzugsposition 24 durch den Datenträger 3 die Transportvorrichtung automatisiert aktiviert. Der Datenträger 3 liegt somit bei Einnahme der zweiten Testposition 18 bevorzugt etwas weiter außerhalb der Lesevorrichtung 2 als dies beim Erreichen der Einzugsposition 24 für den automatischen, motorischen Einzug bzw. für die automatische Annahme des Datenträgers 3 bei einer benutzerseitigen Zufuhr gegeben ist. Manipulationen, insbesondere illegale Leservorbauten in Art von Ausgabesperrvorrichtungen 21 können somit in einfacher Art und Weise automatisiert detektiert werden. Bevorzugt ist das sensorische Mittel 13 bzw. die Erfassungsvorrichtung der Lesevorrichtung 2 zum Verifizieren der Positionierung des Datenträgers 3 in der ersten und/oder zweiten und/ oder dritten Testposition 17; 18; 22 vorgesehen. Diese Sensoren 13 können für die beschriebene Manipulationserkennung zusätzlich implementiert werden bzw. teilweise sogar durch ohnedies vorhandene Positionssensoren für den Transport bzw. die automatische Abwicklung der Kartenmanipulation durch die Lesevorrichtung 2 gebildet sein.

Gegebenenfalls ist die Lesevorrichtung 2 derart ausgebildet, dass bei der Erkennung eines Manipulations- bzw. Störfalles der jeweilige kartenförmige Datenträger 3 einbehalten wird. Dies kann beispielsweise durch Schließen bzw. Aktivieren der Verschlussvorrichtung 15 erfolgen, sodass verhindert ist, dass ein Unbefugter Zugriff auf den Datenträger 3 erlangt. Das Einbehalten des kartenförmigen Datenträgers 3 kann aber auch derart sein, dass der Datenträger 3 via eine dem Ein- und Ausgabeschlitz gegenüberliegende Auswurföffnung 25 automatenseitig einbehalten wird bzw. einen sicheren Ablagebereich übergeben wird.

Beim Auftreten bzw. Erkennen eines Manipulations- bzw. Störfalles an der Lesevorrichtung 2 ist es auch möglich, den entsprechenden kartenförmigen Datenträger 3 automatisiert unbrauchbar zu machen. Dies kann beispielsweise durch automatisierte mechanische Zerstörung bzw. bevorzugt durch Löschen sicherheitskritischer Daten des Datenträgers 3 erfolgen. Hierzu ist der ohnedies vorhandene Schreib- und/oder Lesekopf 14 einsetzbar.

Gegebenenfalls kann auch eine Sperre eines einen Störfall verursachenden, kartenförmigen Datenträgers 3 bei einer zentralen Verwaltungsstelle veranlasst werden. Hierzu ist die Lesevorrichtung 2 bzw. der Selbstbedienungsautomat 1 mit einer Telekommunikationsverbindung versehen. Diese funktionale Sperre des Datenträgers 3 erfolgt dabei automatisiert ausgehend von der Lesevorrichtung 2 bzw. ausgehend von dem die Lesevorrichtung 2 aufnehmenden Selbstbedienungsautomaten 1. Um eine Störungsmeldung bzw. Manipulationsmeldung an einer entfernten Verwaltungs- bzw. Servicestelle abzusetzen, kann die bei Selbstbedienungsautomaten 1, insbesondere bei Bargeldausgabeautomaten, ohnedies vorhandene Telekommunikationsverbindung genutzt werden.

Für den Fall, dass mittels dem erfindungsgemäßen Verfahren eine Störung bzw. Manipulation festgestellt wurde, ist es vorteilhaft, wenn eine diesbezügliche Information an den Bediener des Selbstbedienungsautomaten 1 ausgegeben wird. Hierzu eignet sich insbesondere der Bildschirm 5 der Bedienerschnittstelle 4.

Gegebenenfalls wird dabei auch ein Hinweis betreffend einem möglichen Betrugsversuch ausgegeben bzw. visualisiert. Besonders zweckmäßig ist es, den Bediener gleichzeitig über Verhaltensregeln zu informieren, um finanziellen Schaden zu vermeiden bzw. den Betrugsversuch eines Dritten, welcher die Lesevorrichtung 2 manipuliert hat, zu vereiteln.

Anstelle oder in Kombination zu den Sensoren 13 zur Überwachung des Erreichens definierter Prüf- bzw. Testpositionen ist es auch möglich, das Erreichen einer Testposition 17; 18; 22 anhand vordefinierter Zeiten für den Transport des kartenförmigen Datenträgers 3 bis zur jeweiligen Testposition 17; 18; 22 zu bewerkstelligen. Bei Nichtereichen der jeweiligen Testposition 17; 18; 22 innerhalb der vordefinierten Zeit, welche einer Normal- bzw. Sollzeit entspricht, kann eine Störung bzw. eine mögliche Manipulation signalisiert werden. Diese Signalisierung kann durch einen geheimen Alarm bzw. durch eine eindeutige Meldung an der Bedienerschnittstelle 4 des Selbstbedienungsautomaten 1 erfolgen.

Die vorhergehend beschriebenen Verfahrensschritte der Lesevorrichtung 2 werden bevorzugt durch eine softwaregesteuerte Steuervorrichtung 12 umgesetzt. Diese Steuervorrichtung 12 ist zur Abarbeitung eines Ablaufprogramms für die Umsetzung des entsprechenden Prüf- bzw. Überwachungsverfahrens ausgebildet. Die Steuervorrichtung 12 kann dabei direkt der Lesevorrichtung 2 und/oder dem Selbstbedienungsautomaten 1 zugeordnet sein. Aktualisierungen bzw. Funktionserweiterungen sind sodann in einfacher Art und Weise durch Firmware-Updates möglich.

Die Ausführungsbeispiele zeigen mögliche Ausführungsvarianten der Lesevorrichtung 2 bzw. des Selbstbedienungsautomaten 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Lesevorrichtung 2 bzw. des Selbstbedienungsautomaten 1 deren Bestandteile teilweise unmaßstäblich und/oder vergrößert und/oder verkleinert dargestellt wurden.

### Bezugszeichenaufstellung

- 1: Selbstbedienungsautomat
- 2: Lesevorrichtung
- 3: Datenträger
- 4: Bedienerschnittstelle
- 5: Bildschirm

- 6: Tastatur
- 7: Ein- und Ausgabeschlitz
- 8: Ein- und/oder Ausgabeöffnung
- 9: Transportrolle
- 10: Führungsbahn

- 11: Antriebsmotor
- 12: Steuervorrichtung
- 13: Sensor
- 14: Schreib- und/oder Lesekopf
- 15: Verschließvorrichtung

- 16: Antriebsvorrichtung
- 17: Testposition
- 18: Testposition
- 19: Überstand
- 20: Tiefe

- 21: Ausgabesperrvorrichtung
- 22: Testposition
- 23: Rückzugsschlaufe
- 24: Einzugsposition
- 25: Auswurföffnung

## Patentansprüche

1. Verfahren zur automatisierten Erkennung von betrügerischen Manipulationen an einer Lesevorrichtung (2) für kartenförmige Datenträger (3), umfassend
- motorisches Einziehen eines kartenförmigen Datenträgers (3) bis zu einer ersten Testposition (17), an welcher der kartenförmige Datenträger (3) gänzlich in die Lesevorrichtung (2) eingezogen ist, **gekennzeichnet durch**
- motorisches Ausschieben des kartenförmigen Datenträgers (3);
- automatisiertes Überprüfen des Erreichens einer zweiten Testposition (18), bei welcher der kartenförmige Datenträger (3) im unmanipulierten Zustand der Lesevorrichtung (2) derart weit wieder aus der Lesevorrichtung (2) herausragt, wie dies für den Bediener zum sicheren Ergreifen des kartenförmigen Datenträgers (3) bei dessen späterer Rückgabe erforderlich ist;
- erneutes motorisches Einziehen des kartenförmigen Datenträgers (3) in die erste Testposition (17) oder in eine dritte Testposition (22) zur Verarbeitung bzw. zum Lesen des kartenförmigen Datenträgers (3);
- Aufforderung zur Eingabe des Geheimcodes (PIN) unter der Voraussetzung einer positiv abgeschlossenen Überprüfung für das Erreichen der zweiten Testposition (18);
- Abbruch der weiteren Verarbeitung und Entfall einer Eingabe des Geheimcodes (PIN) und Signalisierung eines Störfalles bei negativem Überprüfungsergebnis für das Erreichen der zweiten Testposition (18).

2. Verfahren nach Anspruch 1, **gekennzeichnet durch** automatisiertes Überprüfen des Erreichens der ersten Testposition (17) für vollständige Einziehbarkeit des kartenförmigen Datenträgers (3).

3. Verfahren nach Anspruch 1 oder 2, **gekennzeichnet durch** automatisiertes Überprüfen des Erreichens der ersten bzw. dritten Testposition (17;22) für Lesbarkeit des kartenförmigen Datenträgers (3).

4. Verfahren nach Anspruch 3, **gekennzeichnet durch** eine Aufforderung zur Eingabe des Geheimcodes (PIN) unter der Voraussetzung einer positiv abgeschlossenen ersten, zweiten und dritten Überprüfung für das Erreichen der ersten bzw. dritten und der zweiten Testposition oder Abbruch der weiteren Verarbeitung und Entfall oder Erübrigung einer Eingabe des Geheimcodes (PIN) und Signalisierung eines Störfalles bei negativem ersten, zweiten oder dritten Überprüfungsergebnis.

5. Verfahren nach einem oder mehreren der vorhergehenden Ansprüche, **gekennzeichnet durch** motorisches und automatisches Einziehen des kartenförmigen Datenträgers (3) unmittelbar nach Einnahme der zweiten Testposition (18).

6. Verfahren nach einem oder mehreren der vorhergehenden Ansprüche, **dadurch gekennzeichnet, dass** ein kartenförmiger Datenträger (3) bei Einnahme der zweiten Testposition (18) vergleichsweise weiter aus der Lesevorrichtung (2) hinausgeschoben wird bzw. vergleichsweise weiter aus der Lesevorrichtung (2) ragt, als dies beim Erreichen einer Einzugsposition (24) für den automatischen, motorischen Einzug bzw. für die automatische Annahme des kartenförmigen Datenträgers (3) bei einer benutzerseitigen Zufuhr gegeben ist.

7. Verfahren nach einem oder mehreren der vorhergehenden Ansprüche, **gekennzeichnet durch** Einbehalten des kartenförmigen Datenträgers (3) bei Erkennung eines Störfalles.

8. Verfahren nach einem oder mehreren der vorhergehenden Ansprüche, **gekennzeichnet durch** automatisiertes Unbrauchbarmachen eines einen Störfall auslösenden, kartenförmigen Datenträgers (3).

9. Verfahren nach einem oder mehreren der vorhergehenden Ansprüche, **gekennzeichnet durch** automatisierte Veranlassung einer Sperre eines einen Störfall auslösenden, kartenförmigen Datenträgers (3) bei einer zentralen Verwaltungsstelle über eine Telekommunikationsverbindung.

10. Verfahren nach einem oder mehreren der vorhergehenden Ansprüche, **gekennzeichnet durch** Ausgabe von Informationen betreffend eine festgestellte Störung an den Bediener.

11. Verfahren nach einem oder mehreren der vorhergehenden Ansprüche, **gekennzeichnet durch** Ausgabe eines Hinweises betreffend einen möglichen Betrugsversuch und von empfehlenswerten Verhaltensregeln.

12. Verfahren nach einem oder mehreren der vorhergehenden Ansprüche, **gekennzeichnet durch** Überprüfen des Erreichens einer Testposition (17; 18; 22) anhand vordefinierter Zeiten für den Transport eines kartenförmigen Datenträgers (3) bis zur jeweiligen Testposition (17; 18; 22) und **durch** Signalisierung einer Störung bei Nichterreichen der jeweiligen Testposition (17; 18; 22) innerhalb der vordefinierten Zeit.

13. Lesevorrichtung (2) für kartenförmige Datenträger (3), **dadurch gekennzeichnet, dass** sie Mittel zur Durchführung des Verfahrens nach Anspruch 1 aufweist.

14. Lesevorrichtung nach Anspruch 13, **dadurch gekennzeichnet, dass** sie eine softwaregesteuerte Steuervorrichtung (12) zur Abarbeitung eines Ablaufprogrammes für die Ausführung eines Verfahrens gemäß einem oder mehreren der vorhergehenden Ansprüche umfasst.

15. Selbstbedienungsautomat (1) mit einer Lesevorrichtung (2) gemäß Anspruch 13.

## Claims

1. Method of detecting fraudulent manipulations on a reading device (2) for card-type data carriers (3) on an automated basis, comprising
- inserting a card-type data carrier (3) by means of a motor as far as a first test position (17) in which the card-type data carrier (3) is entirely inserted in the reading device (2), **characterised in that**
- the card-type data carrier (3) is ejected by motor;
- an automated check is run to ascertain whether a second test position (18) has been assumed in which the card-type data carrier (3) protrudes out of the reading device (2) again to the degree necessary to enable the user to reliably take hold of the card-type data carrier (3) for subsequently removing it provided there has been no attempt to manipulate the reading device (2),
- the card-type data carrier (3) is inserted by means of a motor into the first test position (17) again or into a third test position (22) for processing and reading the card-type data carrier (3);
- a prompt is issued to enter a secret code (PIN) provided the check reaches a positive conclusion that the second test position (18) has been reached;
- if the result of the check with respect to reaching the second test position (18) is negative, further processing is terminated and input of the secret code (PIN) is omitted and an incident is signalled.

2. Method as claimed in claim 1, **characterised in that** an automated check is run to ascertain whether the first test position (17) has been assumed in which the card-type data carrier (3) has been fully inserted.

3. Method as claimed in claim 1 or 2, **characterised in that** an automated check is run to ascertain whether the first or third test position (17; 22) has been assumed in which the card-type data carrier (3) can be read.

4. Method as claimed in claim 3, **characterised in that** a prompt is issued to enter the secret code (PIN) provided the first, second and third check reaches a positive conclusion with respect to reaching the first respectively third and second test position, or further processing is terminated and entry of the secret code (PIN) is omitted or dispensed with and an incident is signalled if the result of the first, second or third check is negative.

5. Method as claimed in one or more of the preceding claims, **characterised in that** the card-type data carrier (3) is automatically inserted by motor immediately after assuming the second test position (18).

6. Method as claimed in one or more of the preceding claims, **characterised in that**, on assuming the second test position (18), a card-type data carrier (3) is pushed farther out of the reading device (2) or protrudes farther out of the reading device (2) than when it has assumed an inserted position (24) for automatic insertion by motor or for automatic acceptance of the card-type data carrier (3) when introduced by a user.

7. Method as claimed in one or more of the preceding claims, **characterised in that** the card-type data carrier (3) is retained if an incident is detected.

8. Method as claimed in one or more of the preceding claims, **characterised in that** a card-type data carrier (3) triggering an incident is automatically rendered unusable.

9. Method as claimed in one or more of the preceding claims, **characterised in that** a block is automatically placed on a card-type data carrier (3) that has triggered an incident in a central administration service via a telecommunication link.

10. Method as claimed in one or more of the preceding claims, **characterised in that** information to the effect that a fault has occurred is output to the user.

11. Method as claimed in one or more of the preceding claims, **characterised in that** instructions relating to potential attempted fraud and a recommended course of action are output.

12. Method as claimed in one or more of the preceding claims, **characterised in that** a check is run to ascertain whether a test position (17; 18; 22) has been reached on the basis of predefined times within which a card-type data carrier (3) is conveyed to the respective test position (17; 18; 22) and a fault is signalled if the respective test position (17; 18; 22) is not reached within the predefined time.

13. Reading device (2) for card-type data carriers (3), **characterised in that** it contains means for implementing the method as defined in claim 1.

14. Reading device as claimed in claim 13, **characterised in that** it contains a software-controlled control device (12) for running a sequential programme for implementing a method as claimed in one or more of the preceding claims.

15. Self-service machine (1) with a reading device (2) as claimed in claim 13.

## Revendications

1. Procédé de détection automatique de manipulations frauduleuses à un dispositif de lecture (2) pour des supports de données en forme de carte (3), comprenant
- rentrée par moteur d'un support de données en forme de carte (3) jusqu'à une première position test (17) dans laquelle le support de données en forme de carte (3) est inséré complètement dans le dispositif de lecture (2), **caractérisé par**
- expulsion par moteur du support de données en forme de carte (3);
- surveillance automatique de l'atteinte d'une deuxième position test (18) dans laquelle le support de données en forme de carte (3), à l'état non manipulé du dispositif de lecture (2) fait à nouveau suffisamment saillie du dispositif de lecture (2), comme cela est nécessaire pour l'opérateur pour une saisie sûre du support de données en forme de carte (3) lors de sa restitution ultérieure;
- à nouveau rentrée par moteur du support de données en forme de carte (3) dans la première position test (17) ou dans une troisième position test (22) pour le traitement respectivement pour la lecture du support de données en forme de carte (3);
- demande d'entrée du code secret (PIN), sous la condition d'une vérification positive de l'atteinte de la deuxième position test (18);
- interruption du traitement ultérieur et omission d'une entrée du code secret (PIN) et signalisation d'un évènement anormal dans le cas d'un résultat de vérification négatif pour l'atteinte de la deuxième position test (18).

2. Procédé selon la revendication 1, **caractérisé par** une vérification automatique de l'atteinte de la première position test (17) pour la rentrée complète du support de données en forme de carte (3).

3. Procédé selon la revendication 1 ou 2, **caractérisé par** une surveillance automatique de l'atteinte de la première ou troisième position test (17; 22) pour la lisibilité du support de données en forme de carte (3).

4. Procédé selon la revendication 3, **caractérisé par** une demande d'entrée du code secret (PIN) sous la condition d'une première, deuxième et troisième vérification positive de l'atteinte de la première ou troisième et de la deuxième position test, ou interruption du traitement ultérieur et omission ou inutilité d'une entrée du code secret (PIN) et signalisation d'un évènement anormal dans le cas d'un premier, deuxième ou troisième résultat de vérification négatif.

5. Procédé selon l'une ou plusieurs des revendications précédentes, **caractérisé par** une entrée par moteur et automatique du support de données en forme de carte (3) directement après l'occupation de la deuxième position test (18).

6. Procédé selon l'une ou plusieurs des revendications précédentes, **caractérisé en ce qu'**un support de données en forme de carte (3), lorsqu'il occupe la deuxième position test (18), est expulsé comparativement plus loin du dispositif de lecture (2) ou fait saillie comparativement plus loin du dispositif de lecture (2) que cela n'est le cas lors de l'atteinte d'une position de rentrée (24) pour la rentrée automatique, par moteur respectivement pour la réception automatique du support de données en forme de carte (3) lors d'une amenée côté utilisateur.

7. Procédé selon l'une ou plusieurs des revendications précédentes, **caractérisé par** la retenue du support de données en forme de carte (3) lors de la détection d'un évènement anormal.

8. Procédé selon l'une ou plusieurs des revendications précédentes, **caractérisé en ce que** le support de données en forme de carte (3), dans le cas où il déclenche un évènement anormal, est rendu automatiquement inutilisable.

9. Procédé selon l'une ou plusieurs des revendications précédentes, **caractérisé par** la génération automatique d'un blocage d'un support de données en forme de carte (3), déclenchant un évènement anormal, auprès d'une administration centrale par une liaison de télécommunications.

10. Procédé selon l'une ou plusieurs des revendications précédentes, **caractérisé par** l'émission d'informations concernant un évènement anormal à l'utilisateur.

11. Procédé selon l'une ou plusieurs des revendications précédentes, **caractérisé par** l'émission d'un renvoi concernant une tentative de fraude possible et de règles de comportement conseillés.

12. Procédé selon l'une ou plusieurs des revendications précédentes, **caractérisé par** la vérification de l'atteinte d'une position test (17; 18; 22) à l'aide de temps prédéfinis pour le transport du support de données en forme de carte (3) jusqu'à la position test respective (17; 18; 22) et par la signalisation d'un évènement anormal lors de la non-atteinte de la position test respective (17; 18; 22) à l'intérieur du temps prédéfini.

13. Dispositif de lecture (2) pour des supports de données en forme de carte (3), **caractérisé en ce que** celui-ci comporte des moyens pour l'exécution du procédé selon la revendication 1.

14. Dispositif de lecture selon la revendication 13, **caractérisé en ce que** celui-ci comporte un dispositif de commande (12) commandé par logiciel pour le traitement d'un programme de déroulement pour l'exécution d'un procédé selon l'une ou plusieurs des revendications précédentes.

15. Dispositif automatique en libre service (1) avec un dispositif de lecture (2) selon la revendication 13.
